# EUROPÄISCHE PATENTANMELDUNG

(11) **EP 3 670 957 A1**
(43) Veröffentlichungstag der Anmeldung: **24.06.2020**
(21) Anmeldenummer: 19215721.2
(22) Anmeldetag: 12.12.2019
(51) Int. Cl.: F16F 3/04, F16F 1/12

(54) **FEDERPAKET**

(30) Priorität: 20.12.2018 DE 202018107342 U
(71) Anmelder: Alcomex Beheer BV, 1716 KG Opmeer (NL)
(72) Erfinder: DELIS, Robert, 1816 JB Alkmaar (NL); DEKKER, Marco, 1969 LB Heemskerk (NL)
(74) Vertreter: Puschmann Borchert Bardehle Patentanwälte Partnerschaft mbB

(57) **Zusammenfassung**

Die Erfindung betrifft ein Federpaket (1), das aus mindestens zwei oder einer größeren Anzahl von einzelnen, gemeinsam miteinander verbundenen Zugfederelementen (6, 7, 8) besteht, die über endseitige Bereiche mittels eines gemeinsamen Halteelementes (5) untereinander verbunden sind, wobei das Halteelement (5) und/oder ein Verbindungsstück (21) bereichsweise einen Form- und Kraftschluss mit den Außendurchmessern der Zugfederelemente (6, 7, 8) eingeht, wobei dieser Verbindungsbereich zwischen dem Halteelement (5) und den Zugfederelementen (6, 7, 8) durch mindestens ein Verbindungselement (10) oder mittels eines gemeinsamen überkronenden Endstückes erzielt wird.

## Beschreibung

Die Erfindung betrifft ein Federpaket, das aus mindestens zwei oder einer weiteren Mehrzahl von einzelnen Zugfederelementen besteht, die über endseitige Bereiche durch ein gemeinsames Halteelement oder Verbindungsstück untereinander verbunden sind.

Durch die DE 10 2015 205 322 A1 ist eine Anschlussvorrichtung für eine endseitige Verbindung einer als spiral- oder schraubenförmig ausgebildeten Zugfeder aus zwei Haltestücken bekannt geworden. Dabei werden die jeweils freien Enden der Haltestücke einer im Wesentlichen gerade verlaufenden Basis mit Abwinkelungen in den Innenraum der Zugfeder eingeführt und anschließend zwischen zwei benachbarte Windungen der Zugfeder gedrückt, wobei die Haltestücke direkt oder indirekt untereinander verbindbar sind. Mit einer solchen zweiteiligen Anschlussvorrichtung können mehrere Zugfedern nebeneinander angeordnet und auch gleichzeitig und untereinander im Endbereich verbunden werden.

Die Aufgabe der Erfindung besteht darin, eine Verbindung von Zugfedern, die untereinander zu Federpaketen in unterschiedlichster Anzahl und Anordnung zusammengestellt werden, zu schaffen, die großen Belastungen dauerhaft unterzogen werden können. Dabei soll eine solche Verbindungsausführung kostengünstig und einfach herstellbar und montierbar sein.

Die Aufgabe der Erfindung wird durch die Merkmale des Anspruches 1 gelöst. Die sich an den Hauptanspruch anschließenden Unteransprüche geben eine weitere Ausgestaltung des erfindungsgemäßen Gedankens wieder.

Aus Kostengründen, bzw. auch aus Platzgründen, werden Federpakete zusammengestellt, deren einzelne Federelemente aus spiral- oder schraubenförmigen Zugfedern bestehen. Die Verwendung von einzelnen Zugfedern ist dabei aus Kostengründen wesentlich einfacher, da solche einzelnen Zugfederelemente einfacher herstellbar und universeller verwendbar sind. Ein weiterer Grund in der Verwendung von derartigen Zugfederelementen, die zu Federpaketen zusammengestellt sind, ist, dass durch die Wahl der Zugfederelemente die für den Anwendungsfall notwendigen Zugkräfte einfacher bereitgestellt werden können, weil sich einzelne, kleinere Zugfederelemente industriell einfacher herstellen lassen und Federpakete, die aus einzelnen Federn bestehen, einen geringeren Platzbedarf benötigten.

Je nach Anwendungsfall ist es somit in einer bevorzugten Ausführungsform möglich, mindestens zwei oder eine weitere Mehrzahl von einzelnen Zugfederelementen über mindestens ein gemeinsames Halteelement oder Verbindungsstück dauerhaft, d. h. durch einen Kraft- und Formschluss, untereinander zu verbinden. Dabei geht ein solches Halteelement oder Verbindungsstück bereichsweise mit den Außendurchmessern der zu verbindenden Zugfederelemente einen Form- und Kraftschluss ein. Dieses bietet die Möglichkeit, das Halteelement so auszubilden, dass mindestens zwei oder drei oder eine weitere Anzahl von Zugfederelementen endseitig untereinander dauerhaft und belastungssicher verbunden werden. Damit die Zugfederelemente nicht aus ihrer Verbindungsposition entfernbar sind, werden zusätzlich Verbindungselemente in der Anzahl der Zugfederelemente mit dem Halteelement so verbunden, dass jeweils zwischen zwei benachbarten Zugfederelementen ein Verbindungselement eingesetzt wird.

In einer weiteren bevorzugten Ausführungsform kann das Halteelement oberseits mit einem einstückigen Verbindungsstück zusätzlich zusammenwirken. Dabei weist das Verbindungsstück abhängig von der Anzahl und Anordnung der Zugfederelemente Konturausbildungen für die Befestigung und das Eindrücken der Federelementenden auf. Diese Konturausbildungen sind dem Durchmesser der verwendeten Federelemente angepasst, wobei der Öffnungsbereich der Konturausbildungen kleiner als der Zugfederdurchmesser ist. Durch diese Konstruktionsart ist es möglich die Enden der Zugfederelemente durch das Eindrücken der Zugfederelemente in die Konturausbildung zu fixieren und gleichzeitig zu halten. Das Verbindungsstück weist im Bereich des Zentrums des Halteelementes ebenfalls eine Bohrung auf, die als Gewindebohrung ausgebildet ist. So kann die gemeinsame Verbindung zu dem Anschlussstück hergestellt werden. Dabei wird das Anschlussstück in die Gewindebohrung geschraubt.

In einer weiteren bevorzugten Ausführungsform ist es möglich, das Verbindungsstück auch ohne das Halteelement einzusetzen. Die Ausführung wird nach der gleichen Vorgehensweise wie vorbeschrieben in Verbindung mit den Zugfederelementen ausgeführt.

Damit eine sichere und dauerhafte Verbindung zwischen dem Halteelement mit den Verbindungselementen und den Verbindungsstücken entstehen kann, ist der Außendurchmesser der zu verbindenden Zugfederelemente in einem Verbindungsbereich mit einer Durchmesseränderung versehen. Eine solche Durchmesserveränderung kann eine Einschnürung sein, d. h. die Windungen weisen beispielsweise im Endbereich eine Verringerung ihres Außendurchmessers auf. Nach der Einschnürung werden oberhalb weiterhin noch einige Windungen mit den ursprünglichen Außendurchmessern beibehalten. Ferner ist es möglich, dass die Endbereiche der zu verbindenden Zugfederelemente einen größeren Durchmesser aufweisen, was durch eine maschinelle Aufweitung des Durchmessers ausgeführt werden kann.

Aus Kostengründen ist es sinnvoll, dass das Halteelement und das Verbindungsstück im Wesentlichen aus einem Flachmaterial hergestellt werden. Dabei ist entsprechend der Anzahl und der Anordnung der zu verbindenden Zugfederelemente das Halteelement oder das Verbindungsstück so gestaltet, dass an ihren Verbindungsbereichen Konturausbildungen vorhanden sind, die zur Ausübung eines bereichsweisen Kraft- und Formschlusses mit den entsprechenden Außendurchmessern der Zugfederelemente, ob Aufweitung oder Einschnürung, verwendet werden können. Dabei sind die Konturausbildungen so gestaltet, dass in einfacher Art und Weise das zu verbindende Zugfederelement in die vorhandene Vertiefung mit der Kontur hineingeschoben wird.

Aus montagetechnischen Gründen kann es jedoch bei der Verwendung der Halteelemente möglich sein, dass die Konturausbildung in ihrem Abmaß geringer ist als der Außendurchmesser des Verbindungsbereiches. Um jedoch eine dauerhafte und sichere Verbindung der Zugfederelemente mit dem Halteelement zu gewährleisten, werden zusätzlich Verbindungselemente, beispielsweise zwischen zwei benachbarten Zugfederelementen, eingesetzt. Diese Verbindungselemente weisen vorstehende Verkröpfungen auf, die in das Halteelement, vorzugsweise in Durchbrüche, eintauchen, so dass durch die Montage eine definierte Position eingenommen wird. Gesichert werden kann diese Position durch eine kraft- und formschlüssige Verbindung zwischen dem Halteelement und dem Verbindungselement. Da die Verbindungselemente jedoch nachträglich, nachdem das Halteelement seine Position zwischen den Zugfederelementen eingenommen hat, aufgesetzt wird, ist es möglich, dass die Verbindungselemente ebenfalls Konturen aufweisen, die sich beispielsweise zwischen zwei benachbarte Zugfederelemente legen. Dabei sind diese Konturen ebenfalls grundsätzlich auf die Außendurchmesser des Verbindungsbereiches ausgelegt, jedoch ist es mit Hilfe der Verbindungselemente möglich, diese Konturen so zu gestalten, dass sie sich zumindest teilweise um den Außendurchmesser des zu verbindenden Zugfederelementes legen und somit eine Positionssicherung des zu verbindenden Zugfederelementes garantieren.

In einer weiteren bevorzugten Ausführungsform wird statt des Verbindungselementes zur Sicherung des Federpaketes auf ein gemeinsames Endstück zurückgegriffen. Ein solches Endstück überkront das Halteelement und die zum Federpaket zusammengefassten Zugfederelemente insgesamt so, dass quasi eine gemeinsame Kappe entsteht.

Bei einer Verwendung eines überkronenden Endstückes ist die endseitige Veränderung der Außendurchmesser der einzelnen Zugfederelemente nicht unbedingt notwendig. Jedoch bei einer Vergrößerung oder einer Einschnürung des Außendurchmessers ist das Endstück einfach an die gewählte Konstruktion und die Anzahl der Zugfederelemente des Federpaketes anpassbar. Das in einem ersten Schritt der Montage die Zugfederelemente verbindende Halteelement oder das Verbindungsstück kann auch grundsätzlich beim Einsatz des abschließenden Endstückes verwendet werden, was eine Lagerhaltung wesentlich vereinfacht.

Die Gestaltung des Endstückes kann mit unterschiedlichen Materialien ausgeführt werden. Neben einer Ausführung in Blech ist auch eine Ausführung in Kunststoff möglich. Während die Blechausführung beispielsweise in einem Tiefziehverfahren angefertigt werden kann, bieten sich für die Kunststoffausführung verschiedene Varianten an. In einer bevorzugten Ausführung kann das Endstück in Kunststoff als Spritzteil kostengünstig in großen Stückzahlen und verschiedenen Farben, beispielsweise zur Kennzeichnung der Federpakete, hergestellt werden.

Zum Anschluss des Federpaketes ist das Endstück beispielsweise mit einer Bohrung versehen, durch die ein Anschlussstück, welches mit dem Halteelement oder dem Verbindungsstück verbunden ist, hindurchgreift.

Je nach Auswahl des Kunststoffes ist auch ein Endstück möglich, das nach der Montage über das Ende des Federpaketes gesteckt wird und anschließend durch eine Wärmebehandlung von außen in seiner Form so verändert wird, dass sich die Endwindungen der Federelemente so an den Kunststoff anlegen, dass ein Formschluss und gleichzeitig ein Kraftschluss entsteht.

Als geeigneten Kunststoff hat sich beispielsweise ein High-Density-Polyethylen herausgestellt. Ein solcher Werkstoff besitzt eine hohe Dehnbarkeit, ist widerstandsfähig gegen Abrieb, besitzt eine gute Formstabilität und ist in einem Temperaturbereich von ca. -40° bis +110° einsetzbar. Der Werkstoff quillt bei polaren Lösungsmitteln nicht auf und ist sehr beständig gegen Säuren und Basen.

Die Erfindung wird nachfolgend anhand eines in den Zeichnungen schematisch darstellten möglichen Ausführungsbeispiels näher erläutert.
- Figur 1: Eine mögliche Ausführungsform eines Federpaketes, bestehend aus drei einzelnen Zugfederelementen;
- Figur 2: eine Explosionsdarstellung eines Endbereiches des Federpaktes nach Figur 1;
- Figur 3: eine Detaildarstellung der im Endbereich untereinander verbundenen Zugfederelemente, nach Figur 1;
- Figur 4: eine mögliche Ausführungsform eines Verbindungsstückes.

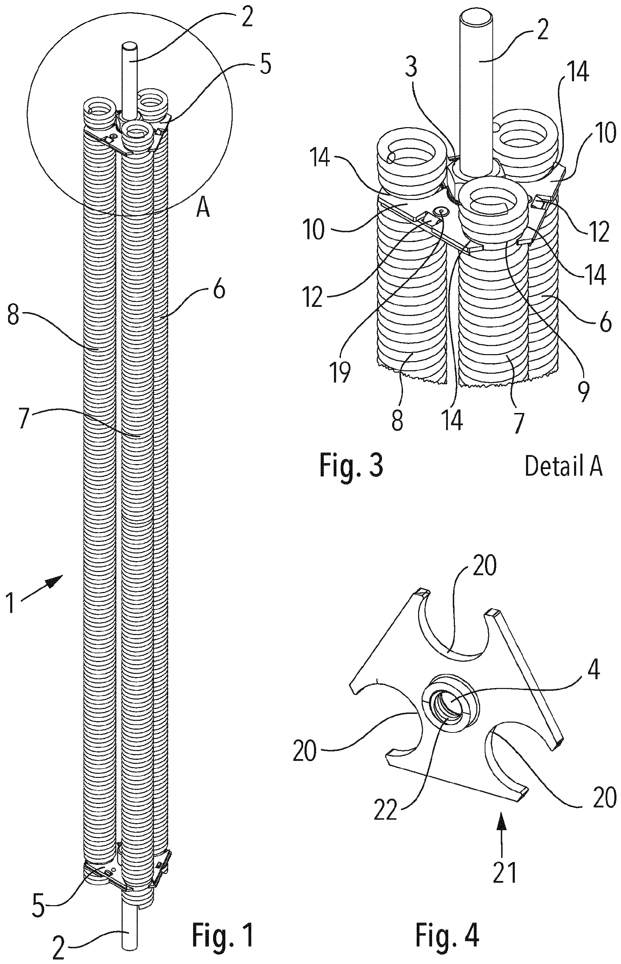

Figur 1 zeigt ein Zugfederpaket 1, das in dem Ausführungsbeispiel aus drei kraft- und formschlüssig miteinander verbundenen Zugfederelementen 6, 7, 8 besteht. Dabei sind die Zugfederelemente 6, 7, 8 endseitig jeweils durch ein gemeinsames Halteelement 5 untereinander verbunden. Das Halteelement 5 ist jeweils mit einem Anschlussstück 2, das beispielsweise mit einem Gewinde versehen sein kann, verbunden, um so das Federpaket 1 für eine Verbindung mit anderen Bauteilen oder dergleichen einsetzten zu können.

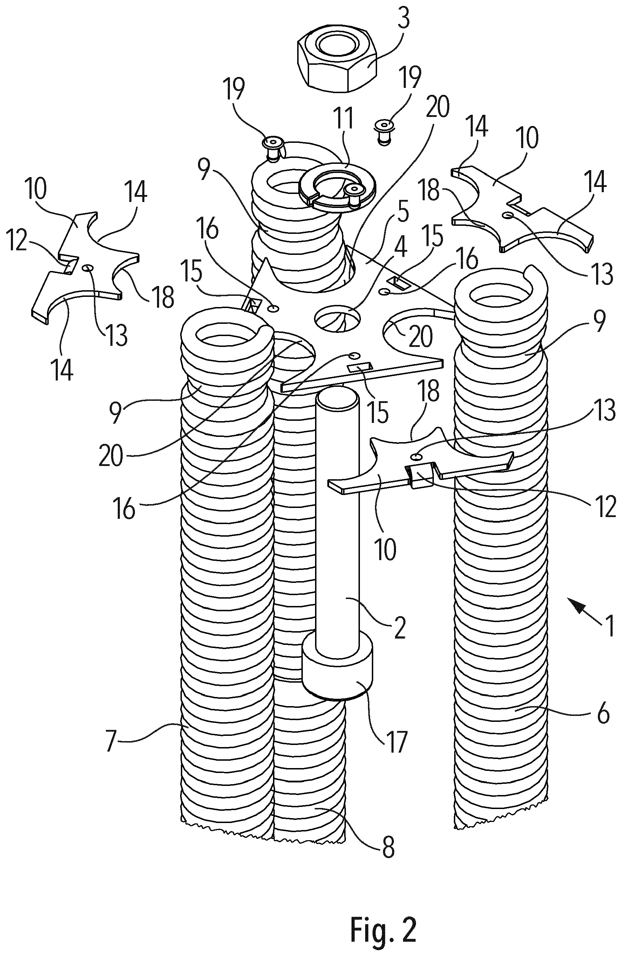

Durch die Darstellung der Figur 2 wird sehr anschaulich wiedergegeben, dass die Endbereiche der Zugfederelemente 6, 7, 8 jeweils Einschnürungen 9 in ihren Außendurchmessern aufweisen. Diese Einschnürungen 9 sind nicht an das direkte Ende der Zugfederelemente 6, 7 gelegt, sondern einige Windungen vorher, so dass die Zugfederelemente 6, 7, 8 endseitig noch den gleichen Außendurchmesser aufweisen wie in ihrer Längenausbildung.

Die drei Zugfederelemente 6, 7, 8 werden in dieser Ausführungsform gemeinsam durch ein Halteelement 5 untereinander verbunden. Dabei weist das Halteelement 5 in seinen Eckbereichen Konturausbildungen 20 auf. Diese Konturausbildungen 20 sind auf den Außendurchmesser an der Einschnürung 9 abgestimmt, so dass das Zugfederelement 6, 7, 8 mit der Einschnürung 9 in die Konturausbildung 20 hineingedrückt werden kann. Zur nachträglichen Sicherung der untereinander verbundenen Zugfederelemente 6, 7, 8 über das gemeinsame Halteelement 5 werden zwischen zwei benachbarten Zugfederelementen zusätzlich Verbindungselemente 10 verwendet. Diese Verbindungselemente 10 sind so gestaltet, dass diese beispielsweise eine Verkröpfung 12 des sonst eben und vorzugsweise flach ausgeführten Verbindungselementes 10 aufweisen. Diese Verkröpfung 12 wird in einen Durchbruch 15 des Halteelementes 5 eingesetzt. Das Verbindungselement 10 ist mit Konturen 14 versehen, die sich nach der Verbindung über die Verkröpfung 12 und den Durchbruch 15 um einen Teil der Außendurchmesser der Einschnürung 9 zwischen zwei benachbarten Zugfederelementen 6, 7 legt. Dabei sind die Konturen 14 so gestaltet, dass diese sich um den Außendurchmesser im Bereich der Einschnürung 9 der Zugfederelemente 6, 7, 8 teilweise anlegen.

Nach der Montage der Verbindungselemente 10 ist eine Positionssicherung der Zugfederelemente 6, 7, 8 erforderlich. Um eine Belastung auf das Federpaket 1 ausüben zu können, ist es notwendig, dass zwischen dem Halteelement 5 und dem Verbindungselement 10 ebenfalls eine dauerhafte Verbindung hergestellt wird. Dieses wird über Bohrungen 13 in dem Verbindungselement 10 und Bohrungen 16 in dem Halteelement 5 ausgeführt. In dem Ausführungsbeispiel nach der Figur 2 werden in diese Bohrungen 13 und 16 beispielsweise Blindniete 19 als Befestigungen eingesetzt, andere Befestigungen, wie beispielsweise Schrauben oder Punktschweißen oder gleichwirkende Verbindungen, sind möglich.

In einer weiteren bevorzugten Ausführungsform ist der Einsatz des Halteelementes 5 in Verbindung mit dem Verbindungsstück 21 möglich. Bei einer solchen Ausführungsform wird auf die einzelnen Verbindungselemente 10 verzichtet.

Eine mögliche Ausführungsform eines Verbindungsstückes 21 kann der Figur 4 entnommen werden. Das Verbindungsstück 21 weist eine zentrale Bohrung 4 mit einem Gewinde 22 auf, über das in Verbindung mit dem Halteelement 5 das Anschlussstück 2 eingeschraubt werden kann. Die Konturausbildungen 20 sind so ausgebildet, dass diese einen Öffnungsbereich aufweisen, der maßlich kleiner ist als der Durchmesser des zu verbindenden Zugfederelements 6, 7, 8. Durch diese Gestaltung werden die Zugfederelemente 6, 7, 8 nach dem Einpressen in die Konturausbildung 20 sicher in dieser Position gehalten.

Das Halteelement 5 und das Verbindungsstück 21 weisen eine im Wesentlichen zentrale Bohrung 4 auf, durch die das Anschlussstück 2 hindurchgeschoben bzw. eingeschraubt werden kann. Das Anschlussstück 2 kann beispielsweise als Schraubelement ausgeführt werden. Bei dem Ausführungsbeispiel wird beispielsweise das Anschlussstück 2 als Schraube mit einem Vorsprung 17 als Kopf wiedergegeben. Nachdem das Anschlussstück 2 in die Bohrung 4 eingesetzt wurde, wird ein Federring und eine Mutter als Sicherungselement 3 auf das Gewinde des Anschlussstückes 2 geschraubt.

Damit das Verbindungselement 10 eine größtmögliche Auflagefläche mit dem Halteelement 5 erzielen kann, kann das Verbindungselement 10 noch zusätzlich mit einer weiteren Kontur 18 versehen sein, die zu dem Anschlussstück 2 gerichtet ist.

Neben der Ausführung des Federpaketes 1 mit den drei Federelementen 6, 7, 8, sind auch alle anderen Anzahlen von Kombinationen und Anordnungen ausführbar. Dabei versteht es sich, dass eine Modifikation des Halteelements 5 und der Verbindungselemente 10, sowie des Anschlussstückes 21, in ihren äußeren Ausführungen im Sinne des Erfindungsgedankens möglich sind.

Die fertige Montage von den Federelementen 6, 7, 8 zu einem Federpaket 1 wird beispielsweise in einer Detaildarstellung A, gemäß der Figur 3, wiedergegeben. Hier wird deutlich, dass sich die Konturen 14 der Verbindungselemente 10 über den Außendurchmesser der Federelemente 6, 7, 8 bereichsweise legen und somit einen Kraft- und Formschluss über den Bereich der Einschnürung 9 zwischen den Federelementen 6, 7, 8 und insbesondere dem Verbindungselement 10 und dem Verbindungsstück ausüben.

### Bezugszeichen

- 1: Federpaket
- 2: Anschlussstück
- 3: Sicherungselement
- 4: Bohrung
- 5: Halteelement
- 6: Federelement
- 7: Federelement
- 8: Federelement
- 9: Einschnürung
- 10: Verbindungselement
- 11: Federring
- 12: Verkröpfung
- 13: Bohrung
- 14: Kontur
- 15: Durchbruch
- 16: Bohrung
- 17: Vorsprung
- 18: Kontur
- 19: Befestigung
- 20: Konturausbildung
- 21: Verbindungsstück
- 22: Gewinde

## Patentansprüche

1. Federpaket (1), bestehend aus mindestens zwei oder einer größeren Anzahl von einzelnen, gemeinsam miteinander verbundenen Zugfederelementen (6, 7, 8), die über endseitige Bereiche mittels eines gemeinsamen Halteelementes (5) untereinander verbunden sind, **dadurch gekennzeichnet, dass** das Halteelement (5) und/oder ein Verbindungsstück (21) bereichsweise einen Form- und Kraftschluss mit den Außendurchmessern der Zugfederelemente (6, 7, 8) eingeht, wobei dieser Verbindungsbereich zwischen dem Halteelement (5) und den Zugfederelementen (6, 7, 8) durch mindestens ein Verbindungselement (10) oder mittels eines gemeinsamen überkronenden Endstückes erzielt wird.

2. Federpaket nach Anspruch 1, **dadurch gekennzeichnet, dass** der Außendurchmesser der zu verbindenden Zugfederelemente (6, 7, 8) im Verbindungsbereich mit dem Haltelement (5) oder dem Verbindungstück (21) eine Außendurchmesserveränderung in Form einer Einschnürung (9) oder einer zum Ende des Zugfederelementes (6, 7, 8) weisende Aufweitung aufweist.

3. Federpaket nach den Ansprüchen 1 und 2, **dadurch gekennzeichnet, dass** das Halteelement (5) und das Verbindungsstück (21) im Wesentlichen aus einem Flachmaterial bestehen und in äußeren Randbereichen mit Konturausbildungen (20) in einer Anzahl der zu verbindenden Zugfederelemente (6, 7, 8) bestehen, um eine Ausübung des bereichsweisen Kraft- und Formschlusses mit den Zugfederelementen (6, 7, 8) zu erzielen.

4. Federpaket nach einem der vorhergehenden Ansprüche, **dadurch gekennzeichnet, dass** das Halteelement (5) und das Verbindungsstück (21) mindestens eine Bohrung (4) aufweisen, in die mindestens ein Anschlussstück (2) mit einem Vorsprung (17) eingreift, wobei das Anschlussstück (2) gegen das Halteelement (5) mit mindestens einem Sicherungselement (3) festsetzbar ist, oder dass das Verbindungsstück (21) in der Bohrung (4) ein Gewinde (22) aufweist, über das das Anschlussstück (2) festziehbar ist.

5. Federpaket nach Anspruch 1, **dadurch gekennzeichnet, dass** der Verbindungsbereich zwischen dem Halteelement (5) und den Zugfederelementen (6, 7, 8) durch mindestens ein Verbindungselement (10) oder mittels eines gemeinsamen, die Federenden der Zugfederelemente (6, 7, 8) überkronenden, Endstückes erzielt wird, wobei das Verbindungselement (10) Konturen (14) aufweist, die sich nach einer Verbindung mit dem Halteelement (5) und einem Teilbereich der Außendurchmesser der Zugfederelemente (6, 7, 8) so verbinden, dass eine kraft- und formschlüssige Verbindung zwischen dem Halteelement (5), dem Verbindungselement (10) und den Zugfederelementen (6, 7, 8) vorliegt.

6. Federpaket nach Anspruch 5, **dadurch gekennzeichnet, dass** in dem Halteelement (5) Durchbrüche (15) enthalten sind, in die Verkröpfungen (12) der Verbindungelemente (10) eingreifen, wodurch das Verbindungselement (10) nach der Montage mit dem Halteelement (5) in seiner Position gehalten wird, wobei die Sicherung des Verbindungselementes (10) mit dem Halteelement (5) durch eine Schraub- oder Niet- oder Blindniet- oder Punktschweißverbindung erzielt werden kann.

7. Federpaket nach Anspruch 1, **dadurch gekennzeichnet, dass** das Endstück als Kappe in einer Metall- oder Kunststoffausbildung ausgebildet ist.

8. Federpaket nach Anspruch 7, **dadurch gekennzeichnet, dass** das Endstück aus einem Kunststoff besteht, der durch gezielte Wärmeeinwirkung eine Kriech- oder Schrumpffunktion aufweist.

9. Federpaket nach einem oder mehreren der vorhergehenden Ansprüche, **dadurch gekennzeichnet, dass** das Anschlussstück (2) als Schraubelement ausgebildet ist.
